# EUROPEAN PATENT SPECIFICATION

(11) **EP 1 569 147 B1**
(45) Date of publication and mention of the grant of the patent: **23.08.2006**
(21) Application number: 04251159.2
(22) Date of filing: 27.02.2004
(51) Int. Cl.: G06Q 10/00, H04L 12/58

(54) **Method and system for synchronizing a drafts folder**
Verfahren und System zur Synchronisierung eines Draft-folders
Méthode et système de synchronisation d'une boîte brouillons

(43) Date of publication of application: 31.08.2005
(73) Proprietor: Research In Motion Limited, Waterloo, Ontario N2L 3W8 (CA)
(72) Inventor: Ferguson, Tabitha, Waterloo Ontario N2L 1T5 (CA)
(74) Representative: Rickard, David John

(56) References cited:
- WO-A-01/78342
- US-A- 6 052 735
- HILD S G ET AL: "MOBILIZING APPLICATIONS" IEEE PERSONAL COMMUNICATIONS, IEEE COMMUNICATIONS SOCIETY, US, vol. 4, no. 5, 1 October 1997 (1997-10-01), pages 26-34, XP000721303 ISSN: 1070-9916

## Description

The present invention relates to data communication, and more specifically relates to email communication using a handheld device.
A person often uses several computer systems to process the same data. For example, at work, a user can utilize a desktop computer connected by a LAN to a company server to write and send an email to an intended recipient. The user might choose to save a copy of the email on both the server and the desktop computer. On the way home, the user may utilize a mobile data communication device (handheld device) having a wireless link to the server to access the copy of the email. Finally, at home, the user may use a laptop computer to download (via a cable modem, for example) the email from the server. After modifying the email using the laptop computer, the user can send the modified email to a second intended recipient. The presence of a plurality of computer systems used to manage the same data presents unique problems that fall under the rubric of "synchronization." Synchronization systems and methods strive to efficiently manage and replicate the same data in various systems.
Such systems and methods for managing and replicating information, such as a draft of an email, from a host system, which can include a company server, to a handheld device typically store the draft on the host system for an indefinite period of time and then transmit in bulk only in response to a user request. When replication of the stored email draft to the handheld device is desired, the user typically places the handheld device in an interface cradle that is electrically connected to the host system via some form of local, dedicated communication link, whether physical, such as a serial cable, or wireless, such as by using infrared signals. Software executing on the handheld device then transmits commands via the local communication link to the host system to cause the host to begin transmitting the user's data to the handheld device.
In these synchronization schemes, the handheld device "pulls" the stored information from the host system in a batch each time the user desires to replicate information among the host system and the handheld device. Therefore, the two systems (host and handheld) only maintain the same data items after a user-initiated command sequence that causes the handheld device to download the data items from the host system.
US6052735-A discloses a desktop computer and a mobile device both containing personal information management systems, such as electronic mail applications. Objects maintained by the electronic mail applications are synchronized between the desktop computer and the mobile device such that attachments to electronic mail messages are receivable by the mobile device. The arrangement also allows the user of the mobile device to dynamically retrieve individual electronic mail message attachments on a per message basis. Further, filtering techniques can be implemented such that, during synchronization, only predetermined attachments are automatically provided to the electronic mail message object store on the mobile device.
WO0178342-A discloses a system and method of pushing user-selected data items from a host system to a user's mobile data communication device upon detecting the occurrence of one or more user-defined event triggers. The user may then move (or file) the data items to a particular folder within a folder hierarchy stored in the mobile data communication device. Software operating at the mobile device and the host system then synchronizes the folder hierarchy of the mobile device with a folder hierarchy of the host system, and any actions executed on the data items at the mobile device are then automatically replicated on the same data items stored at the host system, thus eliminating the need for the user to manually replicate actions at the host system that have been executed at the mobile data communication device.
Hild S G et al, "Mobilizing Applications", IEEE Personal Communications, IEEE Communications Society, US, vol. 4, no. 5, 1^{st} October 1997, pages 26 to 34 discloses a system for data sharing between a stationary desktop computer and a mobile device by propagating file updates across file systems. The system allows a user to replicate data files, such as a document a user is currently editing, from the desktop machine onto the mobile. For example, while at the office, a document is updated on the desktop device; while on the move, the same document is edited on the mobile device. The system tracks file updates and propagates these to the desktop machine.
The above methods and systems of synchronizing have several drawbacks. First, replicating information is contingent on the user remembering to perform some action for the purpose of synchronizing. If the user forgets to perform this action, no synchronization takes place. Second, with the current pull-based systems, the user must deal with the same email twice: on the handheld device and on the host system (e.g., desktop or server) at the office. When many emails have to be processed, this can prove to be quite a nuisance. For example, in e-mail systems where internal company mail and external Internet mail merge into one common mailbox, the average user can receive hundreds of pieces of electronic information a day in one location. As a result, once the user returns to the office, even though the user may have seen and read the mail on the handheld device while traveling, the user has to re-read the messages and then organize the information into folders based on the content. In such case, the handheld device does not lessen the amount of emails that have to be processed when the user returns to the office from a period of travel. Third, because traditional systems rely on a user action to pull data from the host system, emails may not be received in a timely fashion. Thus, if a user causes emails to be transmitted to the handheld device, five minutes later a new message could be sent to the user, but the user would not receive that message until the next time the user fetches the user data items. Thus, a user may fail to respond to an emergency update or message because the user only periodically synchronizes the system, such as once per day. Fourth, the amount of data to be synchronized between the host system and the handheld device can become large if the user does not synchronize on a daily or hourly basis. Large amounts of data lead to bandwidth difficulties, particularly when the handheld device is communicating via a wireless packet-switched network. Fifth, synchronizing the large amounts of data that can accumulate in typical batch-mode synchronization systems can require a great deal of communication between the host and the mobile device, thus leading to a more complex, costly and energy-inefficient system.
The present invention is directed towards synchronizing information, such as an email draft, between a host system, where the information is normally stored, and a mobile data communication device (handheld device) in a manner that is more automated, continuous, efficient and reliable than the previous methods discussed above. As used herein, the term "draft" refers to an email file that has not yet been sent to a recipient. Such an email file may be further modified before being sent, or perhaps may be stored to send without further changes at a later date. The host system, upon sensing a particular user-defined event has occurred, redirects user-selected email drafts from the host system to the user's handheld device. Upon receiving this redirected email draft at the handheld device, the user can perform various operations on the email draft, such as modifying it or storing it in a folder. The results of these types of operations are then synchronized back to the original host system for replication. Automatically, the host system organizes the user's information into the same folder hierarchies (or replicates the other operations performed at the mobile device), thus saving the user from having to perform the operations a second time at the host system. The synchronization of the message operations can be performed in real-time as the operations are executed at the mobile device, or in a batch process when the mobile device 5 is electrically coupled to the host system.
Instead of storing the user's email drafts at the host system and then synchronizing the handheld device with the host system when the handheld device requests that such email drafts be communicated to it, the present invention employs a "push" paradigm that continuously packages and retransmits the email drafts to the mobile data communication device in response to a triggering event detected at the host system. Wireless handheld devices, especially those that can return a confirmation signal to the host that the pushed data has been received are especially well suited for this type of push paradigm.
A system is provided herein that allows a draft of an email composed on a host system, such as a desktop, to be copied to a handheld device when the draft is saved on the desktop. Subsequent modifications to the draft, whether on the desktop or handheld device, are synchronized with the other device.

According to the invention, there is provided a system, method and a computer readable medium according to claims 1, 7 and 15, respectively,

### Brief description of the drawings

Figure 1 shows a block diagram of a system for synchronizing a draft of an email.
Figure 2 shows a block diagram of a system that is representative of an embodiment in which a computer device and a handheld device can both be used to write a draft of an email.
Figures 3A and 3B show block diagrams of the computer device and the handheld device of Figure 2.
Figure 4 shows a flowchart for synchronizing an email draft composed on 30 the computer device.

Figure 5 shows a flowchart for synchronizing an email draft composed on the handheld device.

### Description of Preferred Embodiments

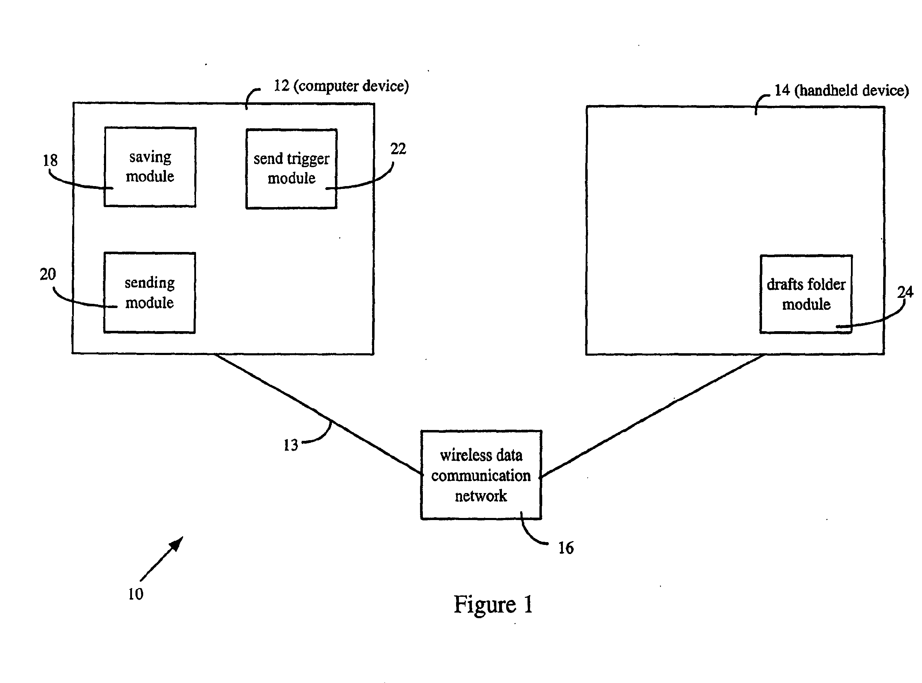

Figure 1 shows a block diagram of a system 10 for synchronizing a draft of an email. The system 10 includes a computer device 12 and a handheld device 14 in communication therewith via a wireless communication network 16. The computer device 12 is connected to the wireless communication network by a communication link 13, which can be any one of several types of communication links known to those of ordinary skill, including hardwired and wireless communication links. The computer device 12 includes a saving module 18, a sending module 20 and a send trigger module 22. The handheld device 14 includes a drafts folder module 24.

The computer device 12 can include any number of computer systems, such as a desktop computer, a laptop computer, or even another handheld device. The computer device 12 can also include a network server connected to a desktop computer via a local-area network ("LAN"). The handheld device 14 can include any mobile computer system capable of processing an email message, such as a cellular handset or personal digital assistant.

The wireless data communication network 16 can include any one of several personal communications services, such as the second generation (2G) systems Digital Advanced Mobile Phone System (D-AMPS), Global System for Mobile communication (GSM) and Code Division Multiple Access (CDMA), the 2.5G systems Enhanced Data rates for GSM Evolution (EDGE) and General Packet Radio Service (GPRS), and 3G or higher generation systems that will replace these.

The saving module 18 includes software and/or hardware to allow a user to save an email message on the computer device 12 as a draft in a drafts folder. For example, many email programs allow a text message to be saved as a draft that can be modified or sent at a later time. This feature also allows a user to work offline while preparing an email draft. Later, after connecting to an appropriate communication network, the email message may be sent to a particular destination. The email program may also contain a "sent folder," which contains copies of emails sent to a recipient.

A user writes a draft of an email on the computer device 12 and saves it therein using the saving module 18. Subsequently, the send trigger module 22 in the computer device 12 issues instructions that cause the sending module 20 to send the draft from the computer device 12 to the handheld device 14.

These instructions are initiated by the computer device 12, and are unsolicited by the handheld device 14. In other words, the draft is "pushed" not "pulled" to the handheld device 14. When the handheld device 14 receives the draft, the drafts folder module 24 stores the draft in a drafts folder (not shown).

In the description so far, different functions were ascribed to the computer device 12 and the handheld device 14. In particular, in the embodiment described above with reference to Figure 1, the computing device 12 is used to write the draft of the email. Subsequently, the draft is pushed to the handheld device 14. In a different embodiment, the roles of the computer device 12 and the handheld device 14 can be swapped so that it is the handheld device 14 that is used to complete a draft. The completed draft may then be pushed to the computer device 12.

In yet another embodiment of the present invention, the roles of the computer device 12 and the handheld device 14 are blurred in so far as both devices can perform similar functions. Thus, the first half of an email draft can be completed on the computer device 12 and then pushed to the handheld device 14 where the second half is completed before the whole draft gets pushed back to the computer device 12.

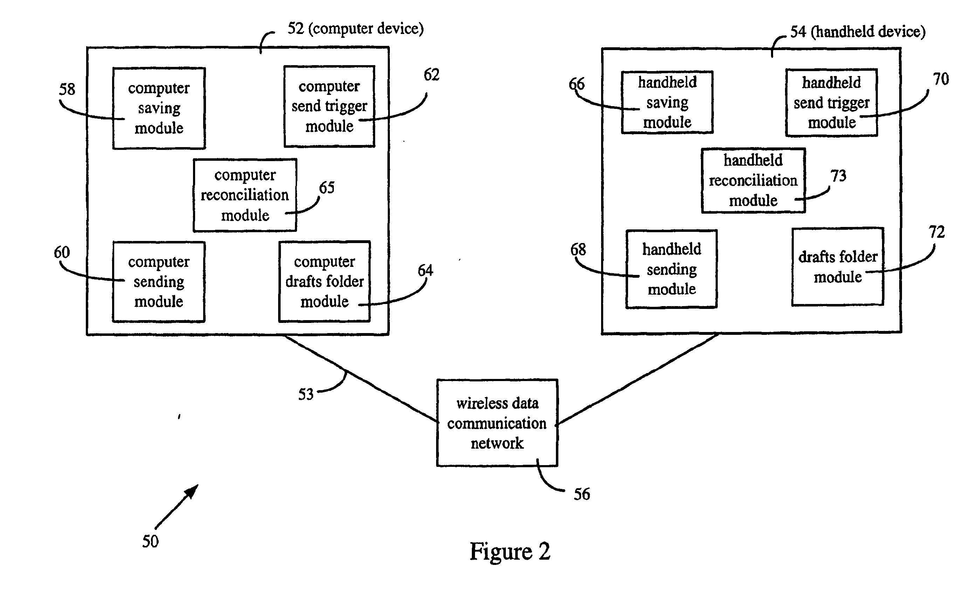

Figure 2 shows a block diagram of a system 50 that is representative of this last type of embodiment in which a computer device and a handheld device can both be used to write a draft of an email. The system 50 provides appropriate synchronization of the draft between the computer device and the handheld device. In particular, the system 50 includes a computer device 52 in communication with a handheld device 54 via a wireless data communication network 56. The computer device 52 is connected to the wireless data communication network 56 via a communication link 53, which can include either a hardwired link or a wireless link. In the latter case, the computer device 52 would also be a handheld device. The computer device 52 includes a computer saving module 58, a computer sending module 60, a computer send trigger module 62, a computer drafts folder module 64, and a computer reconciliation module 65. The handheld device 54 includes a handheld saving module 66, a handheld sending module 68, a handheld send trigger module 70, a handheld drafts folder module 72 and a handheld reconciliation module 73.

As described above, the computer device 52 can include any number of computer systems, such as a desktop computer, a laptop computer, another handheld device, or a network server connected to a desktop computer via a local-area network ("LAN"). The handheld device 54 can include any mobile computer system capable of processing an email message, such as a cellular handset or personal digital assistant.

The saving modules 58 and 66 include software and/or hardware to allow a user to save an email message on the computer device 52 and handheld device 54, respectively, as a draft. For example, several email programs are capable of saving messages in a drafts folder until a user chooses to optionally modify and then send the draft as an email.

In one embodiment, a user creates a draft of an email on the computer device 52 and saves it therein using the computer saving module 58. Subsequently, the computer send trigger module 62 in the computer device 52 issues instructions that cause the computer sending module 60 to send the draft from the computer device 52 to the handheld device 54. These instructions are initiated by the computer device 52, and are unsolicited by the handheld device 54. Thus, the draft is "pushed" not "pulled" to the handheld device 54. When the handheld device 54 receives the draft, the handheld drafts folder module 72 stores the draft in a drafts folder. The computer and handheld reconciliation modules 65 and 73 reconcile various versions of drafts. For example, due to delays associated with the wireless network 56, the user may modify the draft on the handheld device 54, and then modify the draft on the computer device 52 prior to the computer device 52 receiving the draft from the handheld device 54. In this case, the computer reconciliation module 65 determines which draft is more recent, ignores the older version of the draft and saves the newer version.

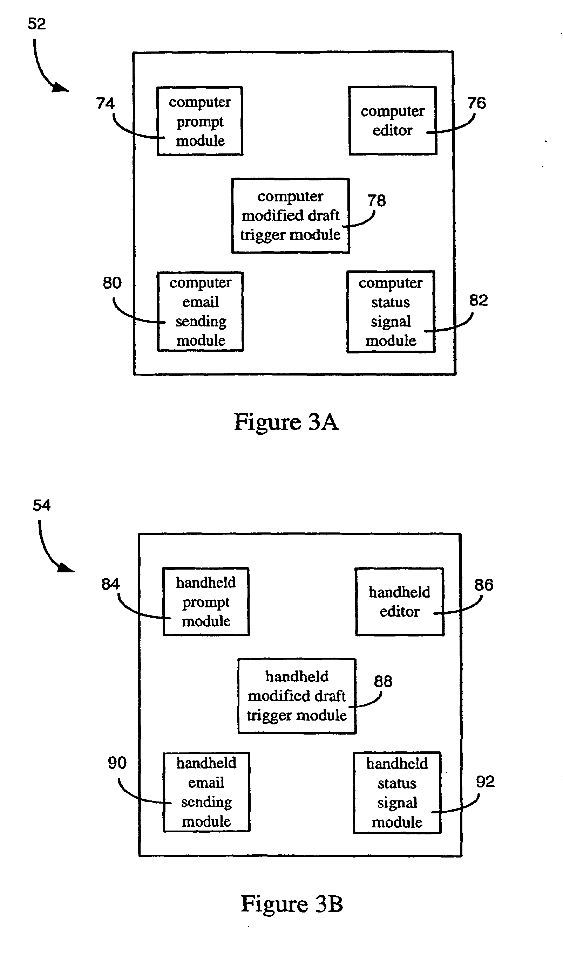

Figures 3A and 3B show block diagrams of the computer device 52 and the handheld device 54 of Figure 2. The computer device 52 further includes a computer prompt module 74, a computer editor 76, a computer modified draft trigger module 78, a computer email sending module 80 and a computer status signal module 82.

The handheld device 54 further includes a handheld prompt module 84, a handheld editor 86, a handheld modified draft trigger module 88, a handheld email sending module 90 and a handheld status signal module 92.

In one embodiment, before the computer send trigger module 62 in the computer device 52 issues instructions that cause the computer sending module 60 to send the draft from the computer device 52 to the handheld device 54, the computer prompt module 74 prompts the user. In particular, when the user saves the email message as a draft using the computer saving module 58, the computer prompt module 74 prompts the user with a question such as "Do you wish to send a copy of the draft to the handheld device?" If the user answers in the affirmative, the computer send trigger module 62 issues the instructions to the computer sending module 60, otherwise no copy of the draft is sent to the handheld device 54.

The user can write a draft of an email on the desktop 52. The user may then save the uncompleted draft thereon. Subsequently, the user may log on to the handheld device 54. According to the principles of the present invention outlined above, the draft, which is created and saved on the desktop, is sent to the handheld device 54. Subsequently, the user can make modifications to the draft using a handheld editor 86 on the handheld device 54.

The user can save the modified draft on the handheld device 54. Subsequently, the handheld modified draft trigger module 88 issues instructions that cause the handheld sending module 68 to send a copy of the modified draft to the computer device 52. These instructions are initiated by the handheld device 54 without being solicited by the computer device 52. In other words, the modified draft is "pushed" not "pulled" from the handheld device to the computer device 52. Optionally, the handheld prompt module 84 can prompt the user to determine whether the modified draft should be sent to the computer device 52.

Alternatively, after the draft is sent from the computer device 52 to the handheld device 54, the user can choose to send the draft as an email to a recipient without modifying the draft. For this purpose, the handheld email sending module 90 includes software and/or hardware for sending the draft as an email to a recipient. For example, the email sending module 90 includes a field where an email address can be entered by a user, and means to send the email to a recipient having that email address, such as by using a mouse to click a "send" icon.

After the email is sent from the handheld device 54, the handheld status signal module 92 in the handheld device 54 sends a signal to the computer device 52 to indicate that the email has been sent.

In the embodiment shown in Figure 2, components of the computer device 52 have analogs in the handheld device 54 and perform similar roles. For example, in the description provided above, a user creates a draft using the computer device 52. The computer device 52 then sends a copy of the draft to the handheld device 54, where it is modified. The handheld device 54 then sends a copy of the modified draft to the computer device 52 and subsequently sends the modified draft to the recipient. The steps performed by the computer and handheld devices can be swapped. To wit, the user can create a draft of an email on the handheld device 54 and save it thereto using the handheld saving module 66. Subsequently, the handheld send trigger module 70 issues instructions that cause the handheld sending module 68 to push the draft from the handheld device 54 to the computer device 52. Optionally, these instructions are issued after the user is prompted by the handheld prompt module 84 and answers affirmatively. Upon receipt, the computer drafts folder module 64 stores the draft in a drafts folder. Modifications to the stored draft can be made on the computer device 52 using the computer editor 76. The user can then save the modified draft on the computer device 52. Subsequently, the computer modified draft trigger module 78 issues instructions that cause the computer sending module 60 to push a copy of the modified draft to the handheld device 54. Optionally, the computer prompt module 74 can prompt the user first. In one embodiment, the modified draft trigger modules 78 and 88 can detect changes to a draft folder either by constantly polling or through the use of notification events, such as a change to the draft folder. The modified draft trigger modules 78 and 88 can handle notifications of changes and/or can poll for changes. When a change is detected (through either method), the change is then sent to the respective sending modules to be packaged and sent across the wireless network.

Alternatively, after the draft is sent from the handheld device 54 to the computer device 52, the user can choose to send the draft as an email to a recipient without modifying the draft. For this purpose, the computer email sending module 80 is used for sending the draft as an email to a recipient.

It should be understood that various permutations are possible in which one of the many components is present in the computer device 52, but absent in the handheld device 54, or vice versa. For example, the computer device 52 may not have the computer prompt module 74, but the handheld device 54 may have the handheld prompt module 84. Or the handheld device may not have a handheld editor 86. In such an embodiment, the handheld device 54, lacking a handheld editor 86, is used to read or forward messages, but not to compose or modify drafts.

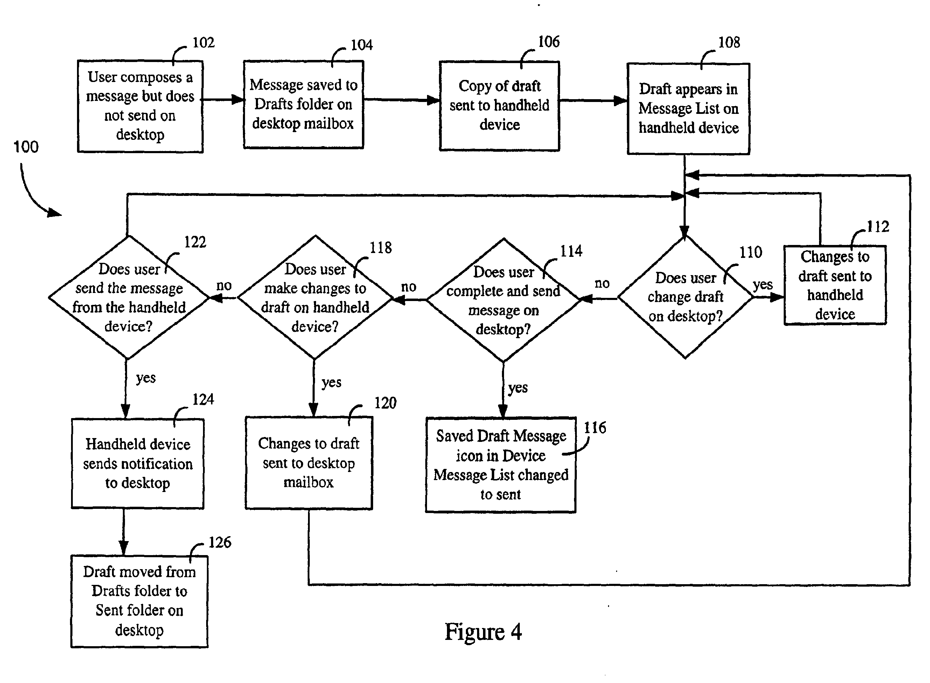

Figure 4 shows a flowchart 100 for synchronizing an email draft composed on a particular type of computer device 52, viz., a desktop. In step 102, a user composes an email message on the computer device 52, but does not send the email message at this point. Instead, in step 104, the user saves the email message with the computer saving module 58. The draft, for example, can be saved to the drafts folder on the desktop of the computer device 52. In step 106, the computer sending module 60 sends a copy of the draft to the handheld device 54. In step 108, after the handheld device 54 receives the draft, the draft appears in a message list that contains messages for the user of the handheld device 54. The handheld drafts folder module 72 can store the copy of the draft in the drafts folder of the handheld device 54.

In step 110, a branch in the flow occurs based on whether the user employs the computer editor 76 to modify the draft. If the draft is modified, flow transfers to step 112, where the modified draft is sent by the computer sending module 60 from the computer device 52 to the handheld device 54. This sending process is repeated whenever the draft is modified on the computer device 52, thus synchronizing the drafts on the two devices 52 and 54, as needed. If the draft is not modified, the flow transfers to step 114, where another branch in the flow occurs that depends on whether the user completes the draft and then sends the draft with the computer email sending module 80. If the draft is sent, the computer status signal module 82 sends a signal to the handheld device 54, and, in step 116, the saved draft in the handheld device is identified with an icon indicating that the draft has been sent. Returning to step 114, if the message is not sent, flow transfers to step 118. At step 118, if the user uses the handheld editor 86 of handheld device 54 to modify the draft, the handheld sending module 68 sends a copy of the modified draft to the computer device 52 in step 120. If no changes are made, then the flow transfers to step 122, which is another branch point. There, subsequent flow depends on whether the user sends the email to an intended recipient from the handheld device 54. If the email is sent, the handheld status signal module 92 sends a signal to the computer device 52 indicating that the message was sent in step 124. In step 126, the computer device 52 can then move the message from the drafts folder to a sent folder where copies of emails sent to a recipient are stored. If the user does not send the message, the flow returns to step 110 from step 122, whence several more iterations of draft modifications and synchronizations can be initiated. The loop involving steps 110 and 112 is terminated when the draft is sent to the intended recipient. If step 122 occurs, so too does step 116. When the user sends the draft from the handheld device 54, the icon is changed to 'sent.' Similarly, if step 114 occurs, so too does step 126. When a user sends a draft from the computer device 52, the draft may be stored in the sent folder. If the draft is not stored in the sent folder, then the draft is deleted at the computer device 52. The action of storing the draft in the sent folder when it is sent may be made configurable by the user.

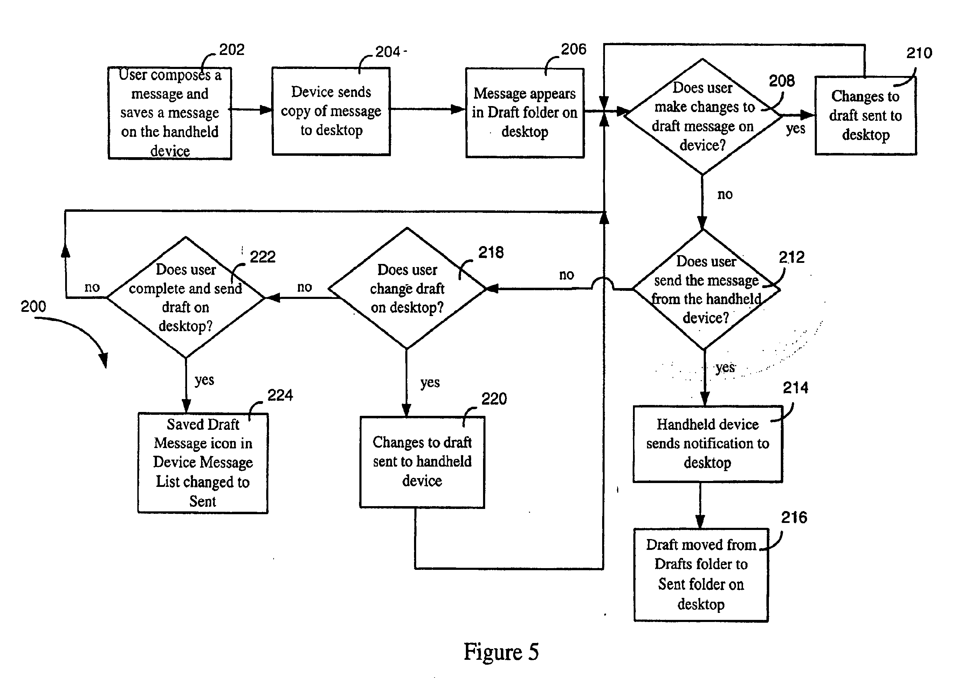

Figure 5 shows a flowchart 200 for synchronizing an email draft composed on a handheld device. In step 202, a user composes an email message on the handheld device 54, but does not send the email message at this point. Instead, the user saves the email message with the handheld saving module 66. For example, the handheld drafts folder module 72 can save the draft in a drafts folder of the handheld device 54. In step 204, the handheld sending module 68 sends a copy of the draft to the computer device 52. In step 206, after the computer device 52 receives the draft, the draft appears in the drafts folder of the computer device 52.

Step 208 is a branch of the flow that depends on whether the user modifies the draft on the handheld device 54. If such changes are made, the handheld send trigger module 70 sends instructions to the handheld sending module 68 that cause a copy of the modified draft to be sent to the computer device in step 210. If no such changes are made, the flow proceeds to step 212, which is another branch point at which a decision is made as to whether the message is sent by the handheld email sending module 90 to an intended recipient. If the message is sent, then, in step 214, the handheld status signal module 92 sends a signal to the computer device 52 indicating that the message was sent. The computer device 52 can then move the message from the drafts folder to the sent folder in step 216. If the message is not sent, then the flow proceeds to step 218, which is another branch point that branches according to whether the user modifies the draft on the computer device 52 with the computer editor 76. If such modifications are made, then the computer modified draft trigger module 78 issues instructions that cause the computer sending module 60 to send a copy of the modified draft to the handheld device 54 in step 220. If no such modifications are made, then the flow transfers to another branch point in step 222 that branches according to whether the user completes and sends the message as an email from the computer device 52 with the computer email sending module 80. If the message is sent, the computer status signal module 82 sends a signal to the handheld device 54 that indicates that the message has been sent. In response, the handheld device 54 can indicate that the message has been sent by changing an icon in the handheld device message list to "sent" in step 224. If the message is not sent, the flow returns to step 208, whence subsequent modifications and synchronizations of the draft can be initiated. If step 222 occurs, so too does step 216. Likewise, if step 212 occurs, so too does step 224.
It should be understood that the computer sending module 60 and the handheld sending module 68 can synchronize the draft, by sending the draft to the other device, after the user is prompted. Alternatively, the synchronization can occur without prompting. In such case, the synchronization can occur automatically after a draft is stored on one device. In another embodiment, the computer device 52, for example, can scan the drafts folder at fixed intervals of time. Each draft in the drafts folder can have an associated data set that indicates when a copy of the draft file was sent to the handheld device 54, if at all, and when the last modification to the draft file occurred on the computer device 52. If the modification occurred after the copy of the draft file was sent (or if no copy was ever sent) to the handheld device 54, then the computer sending module 60 would send a copy of the draft file to the handheld device 54. These steps can also be implemented with the computer device 52 and the handheld device 54 changing roles. Thus, the handheld device 54 can be the device that first scans its draft folder file.
This preferred embodiment is presented only by way of example and is not meant to limit the scope of the present invention, which is defined by the following claims.

## Claims

1. A system (10; 50) for synchronizing emails, the system comprising:
a computer device (12; 52);
a handheld device (14; 54) in communication with the computer device;
a saving module (18; 58, 66) located in at least one of the computer device or the handheld device to allow a user to save an email message therein; and
a sending module (20; 60, 68) in the one device for sending the email message therefrom to the other device;
**characterized in that**
the system has a send trigger module (22; 62, 68) in the one device for issuing instructions, which are unsolicited by the other device, that cause the sending module to send the email message from the one device to the other device; and
the email message is stored as a draft and the send trigger module (22; 62, 68) issues instructions to the sending module (20; 60, 68) in response to the email message being stored as a draft;
the handheld device having an email sending module (90) for sending a draft email received from the computer device to a recipient over a wireless network (56).

2. The system of claim 1, further comprising a prompt module (74, 84) in at least one of the computer device (12; 52) or the handheld device (14; 54) for prompting the user to determine whether the send trigger module (22; 62, 68) is to issue the instructions.

3. The system of either one of claims 1 or 2, further comprising
an editor (76, 86) in at least one of the computer device (12; 52) or the handheld device (14; 54) for modifying the draft to create a modified draft; and
a modified draft trigger module (78, 88) in said one device for issuing second instructions, which are unsolicited by the other device, that cause the one device to send the modified draft to the other device.

4. The system of claim 3, further comprising:
a status signal module (82, 92) in the one device for sending a signal to the other device to indicate that the email has been sent.

5. The system of any one of the preceding claims, further comprising a wireless data communication network(13; 53) to allow the handheld device (14; 54) to be in communication with the computer device (12; 52).

6. The system of any one of the preceding claims, further comprising a reconciliation module (65, 73) that reconciles various versions of the draft or modified draft.

7. A method of synchronizing a draft of an email between a computer device (12; 52) and a handheld device (14; 54), the method comprising:
a user saving an email message on one of the computer device or the handheld device; and
sending the email message from the one device to the other device
the method being **characterized in that** the email message is sent from the one device to the other device in response to commands issued by the one device that are unsolicited by the other device; and
**in that** the email message is stored as a draft and the commands are issued in response to the email message being stored as a draft;
the method further comprising sending draft email received at the handheld device from the computing device to a recipient over a wireless network (56)

8. The method of claim 7, further comprising, before the step of sending, prompting the user to determine whether to send the draft.

9. The method of either one of claims 7 or 8, further comprising the user modifying the draft with one of the computer device (12; 52) or the handheld device (14; 54); and sending the modified draft from the one device to the other device, in response to second commands issued by the one device that are unsolicited by the other device.

10. The method of any one of claims 7 to 9, further comprising the one device sending a signal to the other device to indicate that the email has been sent.

11. The method of claim 9, further comprising the user sending the modified draft as an email from one of the computer device (12; 52) or the handheld device (14; 54) to a recipient; and the one device sending a signal to the other device to indicate that the email has been sent.

12. The method of any one of claims 7 to 11, wherein the computer device (12; 52) is a desktop computer.

13. The method of any one of claims 7 to 12, wherein the step of sending comprises opening a communication link between the computer device (12; 52) and the handheld device (14; 54) via a wireless data communication network (13; 53).

14. The method of any one of claims 7 to 13, further comprising reconciling various versions of the draft or modified draft with a reconciliation module (65, 73).

15. A computer readable medium having computer instructions for synchronizing an email message between a computing device (12; 52) and a handheld device (14; 54), the instructions comprising:
instructions to cause a saving module (18; 58, 66) located in at least one of the computer device or the handheld device to save an email message therein; and
instructions to cause a sending module (20; 60, 68) in the one device to send the email message therefrom to the other device;
the instructions being **characterized in that** they comprise:
instructions to cause a send trigger module (22; 62, 68) in the one device to issue instructions, which are unsolicited by the other device, that cause the sending module to send the email message from the one device to the other device; and
**in that** the email message is stored as a draft and the send trigger module (22; 62, 68) issues instructions to the sending module (20; 60, 68) in response to the email message being stored as a draft; and
instructions to cause the handheld device to send a draft email received from the computer device to a recipient over a wireless network (56).

## Patentansprüche

1. Ein System (10; 50) zur Synchronisierung von E-Mails, das System umfassend:
ein Computergerät (12; 52);
ein Handgerät (14; 54), das in Kommunikation mit dem Computergerät steht;
ein Speichermodul (18; 58, 66), das sich in mindestens einem der beiden Geräte Computergerät oder Handgerät befindet, um einem Benutzer das Speichern einer E-Mail-Nachricht in selbigem zu ermöglichen; und
ein Sendemodul (20; 60, 68) in dem einen Gerät zum Senden der E-Mail-Nachricht von selbigem zu dem anderen Gerät;
**dadurch gekennzeichnet, dass**
das System in dem einen Gerät über ein Sendetriggermodul (22; 62, 68) zum Ausgeben von Anweisungen verfügt, welche durch das andere Gerät nicht angefordert sind, die das Sendemodul dazu bringen, die E-Mail-Nachricht von dem einen Gerät zu dem anderen Gerät zu senden; und
die E-Mail-Nachricht als Entwurf gespeichert wird und das Sendetriggermodul (22; 62, 68) Anweisungen an das Sendemodul (20; 60, 68) als Reaktion auf das Speichern der E-Mail-Nachricht als Entwurf ausgibt;
das Handgerät über ein E-Mail-Sendemodul (90) zum Senden einer vom Computergerät empfangenen Entwurfs-E-Mail an einen Empfänger über ein drahtloses Netzwerk (56) verfügt.

2. Das System gemäß Anspruch 1, des Weiteren umfassend:
ein Aufforderungsmodul (74, 84) in mindestens einem der beiden Geräte Computergerät (12; 52) oder Handgerät (14; 54) zum Auffordern des Benutzers zu bestimmen, ob das Sendetriggermodul (22; 62, 68) die Anweisungen ausgeben soll.

3. Das System gemäß jedem der beiden Ansprüche 1 oder 2, des Weiteren umfassend:
einen Editor (76, 86) in mindestens einem der beiden Geräte Computergerät (12; 52) oder Handgerät (14; 54) zum Ändern des Entwurfs, um einen geänderten Entwurf zu erstellen; und
ein Geänderter-Entwurf-Triggermodul (78, 88) in dem einem Gerät zum Ausgeben von zweiten Anweisungen, welche durch das andere Gerät nicht angefordert sind, die das eine Gerät dazu bringen, den geänderten Entwurf zu dem anderen Gerät zu senden.

4. Das System gemäß Anspruch 3, des Weiteren umfassend:
ein Statussignalmodul (82, 92) in dem einen Gerät zum Senden eines Signals zu dem anderen Gerät, um anzuzeigen, dass die E-Mail gesendet wurde.

5. Das System gemäß jedem der vorherigen Ansprüche, des Weiteren umfassend ein drahtloses Datenkommunikationsnetzwerk (13; 53), um es dem Handgerät (14; 54) zu ermöglichen, in Kommunikation mit dem Computergerät (12; 52) zu stehen.

6. Das System gemäß jedem der vorherigen Ansprüche, des Weiteren umfassend ein Abstimmungsmodul (65; 73), das verschiedene Versionen des Entwurfs oder des geänderten Entwurfs miteinander abstimmt.

7. Ein Verfahren zur Synchronisierung eines Entwurfs einer E-Mail zwischen einem Computergerät (12; 52) und einem Handgerät (14; 54), wobei das Verfahren umfasst:
das Speichern einer E-Mail-Nachricht durch einen Benutzer auf einem der beiden Geräte Computergerät oder Handgerät; und
das Senden der E-Mail-Nachricht von dem einen Gerät zu dem anderen Gerät,
wobei das Verfahren **dadurch gekennzeichnet ist, dass** das Senden der E-Mail-Nachricht von dem einen Gerät zu dem anderen Gerät als Reaktion auf Befehle erfolgt, die durch das eine Gerät ausgegeben werden, welche durch das andere Gerät nicht angefordert sind; und
**dadurch**, dass die E-Mail-Nachricht als Entwurf gespeichert wird und die Befehle als Reaktion auf das Speichern der E-Mail-Nachricht als Entwurf ausgegeben werden;
wobei das Verfahren des Weiteren umfasst das Senden einer am Handgerät vom Computergerät empfangenen Entwurfs-E-Mail zu einem Empfänger überr ein drahtloses Netzwerk (56).

8. Das Verfahren gemäß Anspruch 7, des Weiteren umfassend, vor dem Schritt des Sendens, das Auffordern des Benutzers zu bestimmen, ob der Entwurf gesendet werden soll.

9. Das Verfahren gemäß jedem der beiden Ansprüche 7 oder 8, des Weiteren umfassend das Ändern des Entwurfs durch den Benutzer mit einem der beiden Geräte Computergerät (12; 52) oder Handgerät (14; 54); und das Senden des geänderten Entwurfs von dem einen Gerät zu dem anderen Gerät als Reaktion auf die zweiten Befehle, die durch das eine Gerät ausgegeben werden, welche durch das andere Gerät nicht angefordert sind.

10. Das Verfahren gemäß jedem der Ansprüche 7 bis 9, des Weiteren umfassend das Senden eines Signals durch das eine Gerät zu dem anderen Gerät, um anzuzeigen, dass die E-Mail gesendet wurde.

11. Das Verfahren gemäß Anspruch 9, des Weiteren umfassend das Senden des geänderten Entwurfs durch den Benutzer als eine E-Mail von einem der beiden Geräte Computergerät (12; 52) oder Handgerät (14; 54) zu einem Empfänger; und das Senden eines Signals von dem einen Gerät zu dem anderen Gerät, um anzuzeigen, dass die E-Mail gesendet wurde.

12. Das Verfahren gemäß jedem der Ansprüche 7 bis 11, wobei das Computergerät (12; 52) ein Desktop-Computer ist.

13. Das Verfahren gemäß jedem der Ansprüche 7 bis 12, wobei der Schritt des Sendens das Öffnen einer Kommunikationsverbindung zwischen dem Computergerät (12; 52) und dem Handgerät (14; 54) über ein drahtloses Datenkommunikationsnetzwerk (13; 53) umfasst.

14. Das Verfahren gemäß jedem der Ansprüche 7 bis 13, des Weiteren umfassend das Abstimmen verschiedener Versionen des Entwurfs oder des geänderten Entwurfs mit einem Abstimmungsmodul (65; 73).

15. Ein computerlesbares Medium, das über Computeranweisungen zur Synchronisierung einer E-Mail-Nachricht zwischen einem Computergerät (12; 52) und einem Handgerät (14; 54) verfügt, wobei die Anweisungen umfassen:
Anweisungen, die ein Speichermodul (18; 58, 66), das sich in mindestens einem der beiden Geräte Computergerät oder Handgerät befindet, dazu bringen, eine E-Mail-Nachricht in selbigem zu speichern; und
Anweisungen, die ein Sendemodul (20; 60, 68) in dem einen Gerät dazu bringen, die E-Mail-Nachricht aus selbigem zu dem anderen Gerät zu senden;
wobei die Anweisungen **dadurch gekennzeichnet sind, dass** sie umfassen: Anweisungen, die ein Sendetriggermodul (22; 62, 68) in dem einen Gerät dazu bringen, Anweisungen auszugeben, welche durch das andere Gerät nicht angefordert sind, die das Sendemodul dazu bringen, die E-Mail-Nachricht von dem einen Gerät zu dem anderen Gerät zu senden; und
**dadurch**, dass die E-Mail-Nachricht als Entwurf gespeichert wird und das Sendetriggermodul (22; 62, 68) Anweisungen an das Sendemodul (20; 60, 68) als Reaktion auf das Speichern der E-Mail-Nachricht als Entwurf ausgibt; und
Anweisungen, die das Handgerät dazu bringen, eine vom Computergerät empfangene Entwurfs-E-Mail an einen Empfänger über ein drahtloses Netzwerk (56) zu senden.

## Revendications

1. Système (10; 50) de synchronisation de courriels comportant :
un dispositif informatique (12 ; 52) ;
un dispositif de poche (14 ; 54) en communication avec le dispositif informatique ;
un module d'enregistrement (18 ; 58, 66) situé sur au moins le dispositif informatique ou sur le dispositif de poche permettant à un utilisateur d'enregistrer un courriel sur celui-ci ; et
un module d'envoi (20 ; 60, 68) sur l'un des dispositifs pour envoyer le courriel de celui-ci à l'autre dispositif ;
**caractérisé en cela que**
le système possède un module de déclenchement d'envoi (22 ; 62, 68) sur l'un des dispositifs afin d'émettre des instructions non-sollicitées par l'autre dispositif, entraînant l'envoi par le module du courriel de l'un des dispositifs à l'autre dispositif ; et en cela que
le courriel est enregistré en tant que brouillon et que le module de déclenchement d'envoi (22 ; 62, 68) émet des instructions au module d'envoi (20 ; 60, 68) en réaction au courriel stocké en tant que brouillon ;
le dispositif de poche possédant un module d'envoi de courriels (90) pour envoyer un brouillon de courriel, reçu du dispositif informatique, à un destinataire par un réseau sans fil (56).

2. Le système de la revendication 1, comportant en outre un module d'invite (74, 84) sur au moins le dispositif informatique (12; 52) ou sur le dispositif de poche (14; 54) pour inviter l'utilisateur à déterminer si le module de déclenchement d'envoi (22; 62, 68) doit émettre les instructions.

3. Le système de l'une quelconque des revendications 1 ou 2 comportant en outre :
un programme de modification (76, 86) sur au moins le dispositif informatique (12 ; 52) ou le dispositif de poche (14 ; 54) pour modifier le brouillon afin de créer un brouillon modifié ; et
un module de déclenchement de brouillon modifié (78, 88) sur l'un desdits dispositifs pour émettre les deuxièmes instructions non-sollicitées par l'autre dispositif faisant que l'un des dispositifs envoie le brouillon modifié à l'autre dispositif.

4. Le système de la revendication 3 comportant en outre :
un module de signal d'état (82, 92) sur l'un des dispositifs pour envoyer un signal à l'autre dispositif indiquant que le courriel a été envoyé.

5. Le système de l'une quelconque des revendications précédentes, comportant en outre un réseau de communication de données sans fil (13; 53) permettant au dispositif de poche (14; 54) d'être en communication avec le dispositif informatique (12; 52).

6. Le système de l'une quelconque des revendications précédentes, comportant en outre un module de réconciliation (65, 73) qui réconcilie les diverses versions du brouillon ou du brouillon modifié.

7. Méthode de synchronisation de brouillon de courriel entre un dispositif informatique (12 ; 52) et un dispositif de poche (14 ; 54), ladite méthode mettant en jeu les étapes suivantes :
un utilisateur enregistre un courriel sur au moins le dispositif informatique ou sur le dispositif de poche ; puis
envoie le courriel d'un des dispositifs à l'autre dispositif
la méthode se caractérisant en cela que le courriel est envoyé de l'un des dispositifs à l'autre dispositif en réponse aux commandes émises par le dispositif non-sollicitées par l'autre dispositif ; et
en cela que le courriel est enregistré en tant que brouillon et que les commandes sont émises en réaction au courriel enregistré en tant que brouillon ;
la méthode comportant en outre l'envoi d'un brouillon de courriel reçu au niveau du dispositif de poche du dispositif informatique à un destinataire par un réseau sans fil (56).

8. La méthode de la revendication 7, comportant en outre, avant l'étape d'envoi, une action invitant l'utilisateur à déterminer si le brouillon doit être envoyé ou non ;

9. La méthode de l'une quelconque des revendications 7 à 8, comportant en outre la modification par l'utilisateur du brouillon soit sur le dispositif informatique (12 ; 52) soit sur le dispositif de poche (14 ; 54) ; et l'envoi du brouillon modifié de l'un des dispositifs à l'autre dispositif en réaction aux deuxièmes commandes émises par l'un des dispositifs et non-sollicitées par l'autre dispositif.

10. La méthode de l'une quelconque des revendications 7 à 9, comportant en outre l'envoi par l'un des dispositifs d'un signal à l'autre dispositif indiquant que le courriel a été envoyé.

11. La méthode de la revendication 9, comportant en outre l'envoi par l'utilisateur du brouillon modifié en tant que courriel à partir du dispositif informatique (12 ; 52) ou du dispositif de poche (14 ; 54) à un destinataire ; et l'envoi par l'un des dispositifs d'un signal à l'autre dispositif indiquant que le courriel a été envoyé.

12. La méthode de l'une quelconque des revendications 7 à 11, dans le cadre de laquelle le dispositif informatique (12 ; 52) est un ordinateur de bureau.

13. La méthode de l'une quelconque des revendications 7 à 12, dans le cadre de laquelle l'étape d'envoi met en jeu l'ouverture d'une liaison de communication entre le dispositif informatique (12 ; 52) et le dispositif de poche (14 ; 54) via un réseau de communication de données sans fil (13 ; 53).

14. La méthode de l'une quelconque des revendications 7 à 13, comportant en outre la réconciliation des diverses versions du brouillon ou du brouillon modifié par un module de réconciliation (65, 73).

15. Un support lisible par ordinateur comportant des instructions informatiques pour synchroniser un courriel entre un dispositif informatique (12 ; 52) et un dispositif de poche (14 ; 54), lesdites instructions comprenant :
des instructions faisant qu'un module d'enregistrement (18 ; 58, 66) situé sur au moins le dispositif informatique ou le dispositif de poche enregistre un courriel sur celui-ci ; et
des instructions faisant qu'un module d'envoi (20 ; 60, 68) sur l'un des dispositifs envoie le courriel de celui-ci à l'autre dispositif ;
les instructions se caractérisant en cela qu'elles comportent :
des instructions faisant qu'un module de déclenchement d'envoi (22; 62, 68) sur l'un des dispositifs émette des instructions, lesquelles sont non-sollicitées par l'autre dispositif, entraînant l'envoi par le module du courriel de l'un des dispositifs à l'autre dispositif ; et
en cela que le courriel est enregistré en tant que brouillon et que le module de déclenchement d'envoi (22 ; 62, 68) émet des instructions au module d'envoi (20 ; 60, 68) en réaction au courriel enregistré en tant que brouillon ; et
des instructions pour faire que le dispositif de poche envoie un brouillon de courriel reçu du dispositif informatique à un destinataire par un réseau sans fil (56).
